# EUROPEAN PATENT SPECIFICATION

(11) **EP 2 802 996 B1**
(45) Date of publication and mention of the grant of the patent: **05.06.2019**
(21) Application number: 13736062.4
(22) Date of filing: 09.01.2013
(51) Int. Cl.: G06F 15/16, H04L 29/06, H04L 29/08

(54) **SYSTEMS AND METHODS FOR OPERATING AN AUDIO BOOKS SERVICE**
SYSTEME UND VERFAHREN ZUM BETREIBEN EINES HÖRBÜCHERDIENSTES
SYSTÈMES ET PROCÉDÉS PERMETTANT DE FAIRE FONCTIONNER UN SERVICE DE LIVRES AUDIO

(30) Priority: 09.01.2012 US 201261584654 P
(43) Date of publication of application: 19.11.2014
(73) Proprietor: Harman International Industries, Inc., Stamford, CT 06901 (US)
(72) Inventor: FRANCIS, Raymond, El Cerrito, CA 94530 (US)
(74) Representative: Westphal, Mussgnug & Partner Patentanwälte mbB
(86) International application number: PCT/US2013/020805
(87) International publication number: WO 2013/106412

(56) References cited:
- EP-A1- 2 026 258
- WO-A1-97/20274
- US-A1- 2008 034 126
- US-A1- 2008 189 099
- US-A1- 2008 301 318
- US-A1- 2009 144 781
- US-A1- 2009 327 895
- US-A1- 2010 191 608
- US-A1- 2011 153 330
- US-A1- 2011 178 616

## Description

### TECHNICAL FIELD

One or more embodiments relate to systems and methods for operating an audio books service or other similar audio service for content such as a magazine, newspaper, and the like. In some embodiments, the audio content may be played in a vehicle and operated from a head unit of the vehicle. In some embodiments, the audio content may be played from a nomadic device, such as a mobile phone or personal media player.

### BACKGROUND

For many, audio books are a convenient way of enjoying a book without having to set time out to read. Audio books can be heard at the gym while exercising, while driving a vehicle, while walking or running, to name a few examples. As technology progresses, the ways of listening to an audio has simultaneously changed. Audio books were first heard from cassette tapes and then CDs. While these traditional mediums for audio books still exist, an increasingly popular medium is listening to audio books streamed or downloaded from the Internet. For example, services such as AUDIBLE.COM allow a user to purchase and download audio books to a mobile phone or an MP3 player.

With current audio book services, an Ethernet or WiFi connection is typically recommended for the best results with download and playback due to the data size of the content. However, a user may desire to listen to an audio book when such connections are not available. While many mobile phones and other portable devices come with WiFi capability, an access point is required to use the phone's WiFi which is not always available. For example, a WiFi access point may not be available while driving in a vehicle. Without WiFi, a user may use a mobile phone's cellular line to access the Internet. However, the bandwidth of a cellular connection is limited compared to that of its counterparts such as Ethernet or WiFi. Still, an audio book user, or a user of any content, may desire to download information from the Internet despite not having a WiFi connection.

Document EP 2 026 258 A1 discloses a method for downloading an attachment to an attachment viewer of a portable electronic device. The method includes sending an initial data request from the attachment viewer to a server in response to receipt of an email message including the attachment by the portable electronic device. A graph structure representing a map of the attachment is accessed from the server, the graph structure having been previously built on the server. The graph structure is reconstructed in response to the initial request and is encapsulated in data having an attachment viewer readable format, the data being stored on the server. Successive chunks of data are downloaded from the server to the attachment viewer responsive to successive user requests. The successive chunks of data are each stored on the portable electronic device prior to display thereof. The successive chunks of data are displayed on the portable electronic device and respective next chunks of data are downloaded from the server.

Document WO 97/20274 A1 discloses a personal electronic book system. The system is sized and configured to be book size and to open like a book for use. When opened, the user sees two facing page-like toch-sensitive display screens with black print on white background. Icons represent the electronically stored material, which are selected by touching the icon. When a book, magazine, newspaper, or the like is selected, its table of contents is displayed and the user can then read page by page or go directly to a particular page by touching the selection listed in the table of contents. Closing the personal electronic book automatically shuts down the device.

### SUMMARY

One aspect relates to a computer system for outputting literary content on a user device. The computer system includes at least one user device. The user device may be configured to download on the user device literary content data stored on a remote computer system. The literary content data may be segmented into multiple segments for download to the user device. Non-limiting example of the user device may be a portable device or a vehicle head unit. A portion of the multiple segments of the literary content data may be received and stored in memory of the user device.

Upon occurrence of an event, at least a portion of remaining segments may be downloaded. Select segments of the stored segments may also be removed from memory. The event may be a threshold amount of content that has been played on the user device. Once the threshold amount of content has been played on the user device, a first number of segments is available on the user device, the first number of segments being less than the total number of segments on the remote computer system and comprising a currently playing segment, a second number of segments immediately succeeding the currently playing segment and a third number of segments immediately preceding the currently playing segment. For example, the threshold amount may be based on a threshold number of chapters or pages. Additionally or alternatively, the threshold amount may be based on a threshold time of playback. As an additional or alternative example of an event, the event may be a user request for additional segments. A segment downloaded to the user device and selected by the user may be output.

In some embodiments, the segments removed from memory are temporarily removed. Upon a user request, the removed segments can be retrieved.

Another aspect may be a software interface for outputting literary content on a user device. Through the software interface, content from multiple content sources may be received over an Internet connection at a user device. The multiple content sources may be Internet-based services and information (e.g., and without limitation, Internet radio, news, and social media services). The content from the multiple content sources may be aggregated and displayed via the software interface. A selection of an audio books service, which may be at least one of the Internet based services, may be received and the audio books service executed via the software interface. Input may be received via the software interface to download at least one audio book from the audio books service. A defined portion of the audio book may be downloaded in response to the input. Additional portions may be downloaded to the user device upon occurrence of an event. A segment via the software interface may be output in response to a user selecting the segment for output.

In some embodiments, the audio books may require post-processing. Post-processing may include a determination that the audio book requires segmentation for download based on a bandwidth limitation. Based on the determination, the audio books may be segmented into multiple segments. The segmenting may include identifying natural stops of the audio book and segmenting according to the natural stops.

Another aspect includes a method of outputting literary content on a user device. The method may include executing a content-serving application on a user device which provides content to multiple sources of Internet based services and information. A selection of an audio book service may be received at the user device via the content-serving application. A connection to the audio book service (which may be hosted remotely) may be made via the user device. Defined segments of the audio book may be downloaded and the additional segments downloaded upon occurrence of an event. Upon download of the audio book, the audio book may be associated to one or more input functions of the content- serving application. Selection of the one or more input functions executes the selected audio book and one or more functions of the audio book. In some embodiments, the functions of the audio book operated via the content-serving application may emulate functions on a radio. Selected segments of the downloaded segments are removed upon occurrence of the event, wherein the event is a threshold amount of the audio book that has been executed on the user device. Once the threshold amount of the audio book has been executed on the user device, a first number of segments is available on the user device, the first number of segments being less than the total number of segments and comprising a currently executed segment, a second number of segments immediately succeeding the currently executed segment and a third number of segments immediately preceding the currently executed segment.

### BRIEF DESCRIPTION OF THE DRAWINGS

FIGURE 1 illustrates a block system topology for a vehicle infotainment computing system (VICS);
FIGURE 2 illustrates a non-limiting exemplary process for downloading and storing one or more audio books;
FIGURE 3 illustrates a process for downloading segments of an audio book such as chapters or tracks;
FIGURE 4 illustrates a process for browsing and retrieving audio book content;
FIGURE 5 illustrates a process for bookmarking content in an audio book;
FIGURE 6 illustrates a process for manually reference marking, or "dog earring," content in an audio book;
FIGURE 7 illustrates a process for automatically reference marking, or "dog earring," content in an audio book;
FIGURE 8 illustrates a system architecture for operating one or more services via the content-serving application running on a nomadic device; and
FIGURE 9 illustrates system architecture for operating one or more services via the content-serving application running on a head unit.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Unlike with Podcasts or Internet radio, content from audio books cannot efficiently be downloaded at once to a device such as a mobile phone due to the size of an audio book and the bandwidth of a mobile phone. Typically, a WiFi connection may be used so that the entire book can be downloaded to the device. However, WiFi may not always be available, particularly in a vehicle, so the data may be transmitted to the mobile device via a mobile connection. Sending an entire book over a mobile connection is not an efficient use of the connection's bandwidth.

Additionally, a user may desire to use other applications providing other content, such as Internet Radio, news, social media applications, and the like, without the repetitious process of loading and closing each application in order to use the next application. Rather, a single interface to load and operate multiple applications/content may be used.

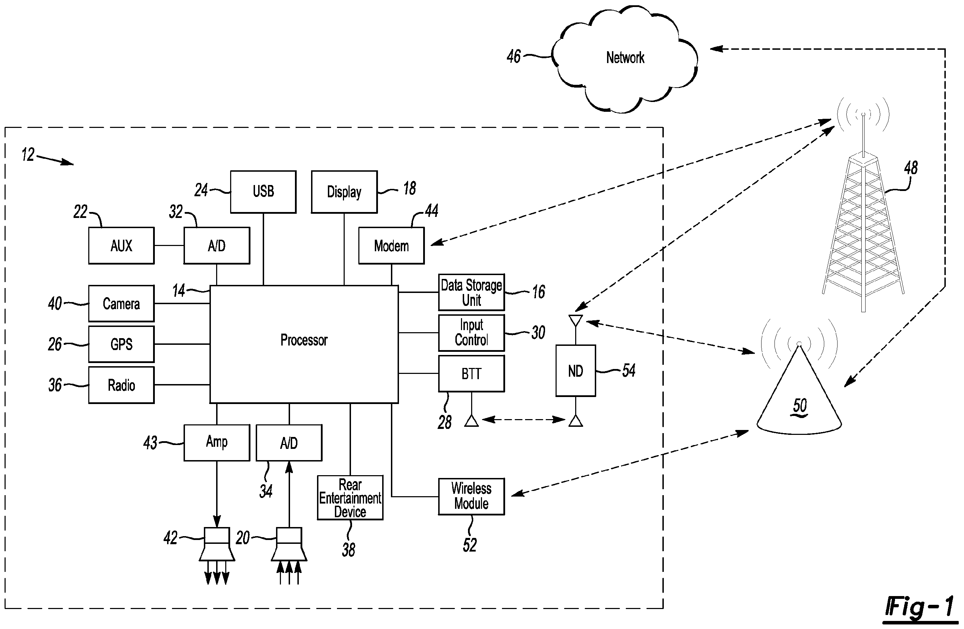

Figure 1 illustrates a block topology of a vehicle infotainment computing system (VICS) 12, also referred to herein sometimes as a "head unit," for a vehicle 10. The VICS 12 may include a processor 14 that controls at least some portion of the VICS 12 and provides for on-board processing of controls and commands received by the VICS 12. Data that may be received and processed by the processor 14 may be stored in a data storage unit 16. The data storage unit 16 of the VICS 12 may include non-persistent or volatile memory, such as (and without limitation) random access memory (RAM), and persistent or non-volatile memory, such as (and without limitation) a hard disk drive (HDD) or flash memory.

The head unit 12 may also include a visual front end interface, such as a display 18, located in the vehicle. The display 18 may be an LCD display or a graphical display. In some embodiments, the interface may have a touch sensitive screen. In additional or alternative embodiments, the interaction with the VICS 12 may occur through, button presses, audible speech and/or speech synthesis and displayed on display 18.

The VICS 12 is also provided with a number of different inputs through which the user can interface or interact with the VICS 12. For example, the vehicle 10 may be provided with a microphone 20, an auxiliary input 22, a USB input 24, a GPS input 26, and a BLUETOOTH input 28. An input control 30 may also be provided to allow a user to swap between various inputs. Signals passing from the auxiliary input 22 and the microphone 20 may pass through one or more analog-to-digital converters 32, 34 before being passed to the processor and vice-versa. For purposes of clarity, two analog-to-digital converters are shown. However, the microphone 20 and the auxiliary input 22 may share an A/D converter.

Additional inputs to the processor 14 may include one or more vehicle cameras 40. The vehicle cameras may be front or rear view cameras and/or in the vehicle. The output of the camera may be presented from the display 18 and/or one or more rear-entertainment device 38. Additional inputs may include one or more radios 36 (e.g., AM/FM radio, satellite radio, etc.) and one or more rear entertainment devices 38. The output from the radio may be transmitted from one or more in-vehicle speakers 42. The rear entertainment device 38 may include one or more media players (e.g., a DVD player) and one or more displays visible to rear seat passengers from which video, picture and/or audio may be output.

Outputs to the system may include, but are not limited to, the display 18, one or more speakers 42 and/or one or more rear entertainment devices having a display 38. The speaker may be connected to an amplifier 43 and may receive its signal from the processor 14 through a digital-to-analog converter.

The vehicle 10 may include an on-board modem 44 for two way communication of data and message between the vehicle 10 and the external network 46. As a non-limiting example, modem 44 may be a USB cellular modem. In some embodiments, the modem may be an embedded modem. The data and messages may be exchanged by communicating with the one or more cellular towers 48.

Alternatively, the VICS 12 may use a BLUETOOTH transceiver 28 to communicate with a user's portable (sometimes referred to as "nomadic") device 54 (e.g., mobile phone, smart phone, PDA, or any other device having wireless remote network connectivity). Connectivity may also be provided using a USB connection linking the nomadic device 54 with the VICS 12. This connection can be enabled using an accessory protocol (as non-limiting example, the IPHONE accessory protocol or the ANDROID accessory protocol). Using the portable device 54, communication with the external network 46 may be accomplished through, for example, communication with a cellular tower 47 and/or a wireless access point 50. Data may be communicated from the vehicle 10 (e.g., from the processor 14) to the network 46 utilizing, for example, a data-plan, data over voice, or DTMF tones associated with nomadic device 54. In some embodiments, pairing the portable device 54 and the BLUETOOTH transceiver 15 may be instructed through one or more buttons or similar input (not shown). The one or more buttons may be one or more hard keys located in the vicinity of the vehicle driver and/or one or more soft keys shown on the display 18. The soft keys may or may not be touch-sensitive (e.g, on a touchscreen display). Additionally or alternatively, the soft keys may be one or more physical buttons mapped to the one or more soft keys.

Additionally or alternatively, the vehicle 10 may be outfitted with one or more wireless modules 52 for wireless communication with the network 46. A non-limiting example of such a wireless communication is any communication meeting the 802.11 IEEE standard such as WiFi or WiMax. To communicate with the network 46, a connection may be made to a wireless hotspot 50 which may be in the vehicle or outside and remote from the vehicle (e.g., and without limitation, at a publically available hotspot venue). For purposes of simplicity and clarity, Figure 1 shows an external hotspot 50.

The processor 14 may be provided with an operating system including an API to communicate with modem application software. The modem application software may access an embedded module or firmware on the BLUETOOTH transceiver 28 to complete wireless communication with a remote BLUETOOTH transceiver (such as that found in a nomadic device).

The nomadic device 54 may be capable of voice band and/or broadband data communication. A user may be able to transfer data over the voice band using a technique called frequency division multiplexing. Thus, a user of the nomadic device may be able to talk over the device while data is being transferred. If the user has a dataplan associated with the nomadic device, broadband transmission may be possible.

Incoming data to the VICS 12 may be passed through the nomadic device via a data-over-voice or data plan through the onboard BLUETOOTH transceiver 28 and into the vehicle's internal processor 14. Alternatively, the data may be passed through the modem 44 via cellular communication to the processor 14. Alternatively, the data may be passed through the wireless module 52 via a broadband connection to the processor 14. Data may be stored in the data storage unit 16 of the VICS 12.

Additional sources that may interface with the VICS 12 include personal navigation device, vehicle navigation device, onboard GPS devices, or remote navigation systems having connectivity to network 46. Further, the processor 14 could be in communication with a variety of other auxiliary devices connected through a wireless or wired connection. Auxiliary devices may include, but are not limited to, personal media players, wireless health devices, portable computers, and the like.

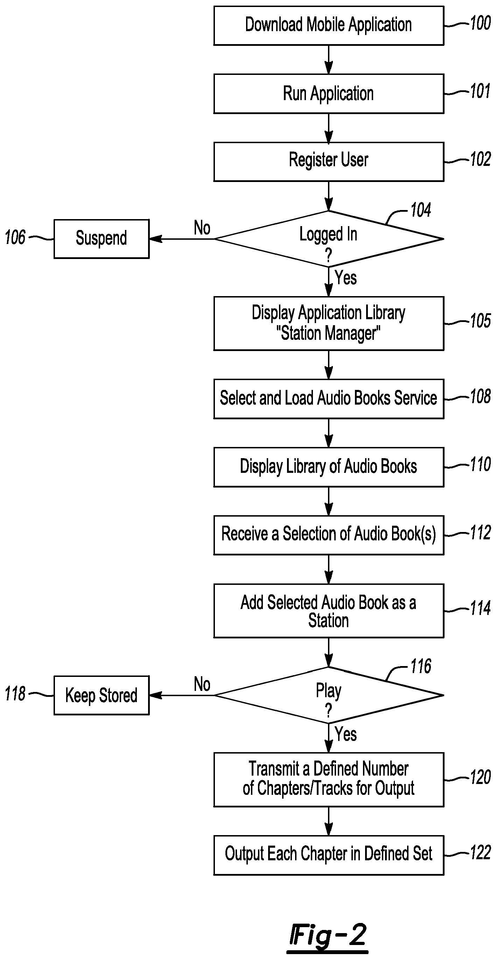

Figure 2 illustrates a process for downloading and storing audio book data for use in a vehicle. While the various embodiments are described with respect to audio books, the embodiments are not limited to audio books. Other content may be downloaded such as magazines, newspaper articles, and the like.

To download audio books, software may be downloaded and stored in the cache of memory 16 of the VICS 12 and/or on the portable device 54 such as a mobile phone. If downloaded to the portable device 54, the software may be controlled via the VICS 12, and the GUI of the software displayed on the VICS 12, when the software is being used in the vehicle 10. However, operation and processing may occur on the portable device. In some embodiments, the operation and processing may be performed on the portable device and the VICS 12.

In some embodiments, the software may be a mobile application. The software may be part of an application enabling download or transmission of audio books. For example, the software may be a content serving application providing access to multiple services or applications such as services found on the Web. The audio books application may be one service offered through this application. A non-limiting example of such an application is one developed by HARMAN INTERNATIONAL INDUSTRIES as AHA RADIO. As used herein, the term "download," and variations thereof, as applicable, refers to the transmission of content including, but not limited to, content download and streaming.

The content for audio books may be received from audio books publishers and distributors. The content may be stored on the servers of the content aggregator (e.g., the business entity providing the content-serving application) or the content may be available through an API of an audio book publisher or distributor. Alternatively, the content may be available through a data feed system (e.g., and without limitation RSS) from the audio book publisher or distributor. There may be more than one provider of audio books content, so the system can handle content from different sources. Additionally, some of the content providers may offer some titles for no cost and offer other titles for cost. Accordingly, the system can process different types of accounts that an end-user may have with content owners. Where the audio books are hosted by the content aggregator, the user may access the audio books through authorized access to the content aggregator's servers and downloading the content from one or more databases of audio book content. In some embodiments, the server(s) and database(s) may be in a network cloud.

A user may download the software application using an Internet connection (block 100). If the application is stored on the VICS 12, the application may be downloaded directly in the vehicle or transferred from a storage medium, such as a USB drive, to the VICS 12. Once downloaded, the user may execute or run the application (block 101) and register with the service (block 102) by creating a profile and credentials for logging in to the service. Alternatively or additionally, the software application may be executed on the portable device 54 and operated via the VICS 12. The portable device 54 and VICS 54 may communicate via wired or wireless communication.

The user may be required to log in order to download audio books. In some cases, the user may save their credentials in memory or the system may automatically open or run the application for the user after the first log in until the user logs out. If the user is not logged in (block 104), the process will not continue until the user logs in and the application may wait until credentials are received (block 106). Once the user has entered log-in credentials and has been authenticated as a user, the library catalog or "station manager" may be displayed (block 105). The audio books service may be selected from the station manager and loaded for use (block 108). If the application is a content-serving application (also referred to as a content aggregating application), it may be required that the audio books application is selected in order to download audio books to a user device (such as the nomadic device 54 or the VICS 12). Once the audio books application is executing, the audio books application may be used within the content aggregating application.

In some embodiments, a number of soft buttons on or near the display or in the vicinity of the vehicle driver (e.g., on the steering wheel or in the center stack of the vehicle) may be used to start up and operate the audio books application. Additionally or alternatively, touch-sensitive buttons may be used to such as, e.g., if the display 18 is a touchscreen display. In some embodiments, a number of menus may be navigated in order to reach and start up the audio books application. As a non-limiting example, a user may enter a "Station Manager" to obtain a list of option, select a "Talk," option, and then select an "Audio Books" application. In another non-limiting example, the user may use a search function on the content aggregating application to retrieve the audio books application. Of course, the number and description of menu items is non-limiting and may vary depending on the specific implementation of the invention.

When logging into the system, the user may make as few actions as possible in order to listen to the content. In one embodiment, the user may have an account with the content owner that allows a certain level of access. Having an account with the content owner may grant the user the ability to create preferences and have content list available. To obtain the audio books, the user's account with the content owner may be authenticated via the content-serving application. Once active, the user may have the ability to listen to the permitted content. In another embodiment, the user independently buys an audio book and can play it from the content-serving application. In another embodiment, the user may browse book choices in the station and have the option to select and download a book (in some cases, for a fee) using the user's account with the content owner. The user may log into the account with the content owner from the content-serving application.

When the audio books application is displayed, a library of audio books may be displayed on the display 18 (block 110). The library may be presented as a list and may include graphical items, for example (and without limitation), book covers. The books may additionally or alternatively be organized according to title, genre, or author. In some embodiments, one or more of the audio books in the library may be presented to the user audibly, for example, as speech. The user may also select one or more audio books through one or more voice commands.

At least one book may be selected from the library (block 112). The selected book may be added and/or saved as a book to the library of available books to the user (e.g., it may become a "station" of content, as described below) (block 114). As will be described below, the selected book may be received at the VICS 12 or the portable device 54 in defined segments rather than as a whole piece. This may be done in order to efficiently download the book portions as needed over the limited bandwidth capacity of a wireless mobile communication. Additionally, an audio book listener may want to refer back to portions of the books while listening. This is somewhat different than what a listener may do while listening to a Podcast or Internet radio. Typically, the reference back may be to nearby chapters. Thus, the download of the audio books content may be done with this in mind. However, as will be described in further details below, the user may refer to, and download, any portion of the audio book at any time.

In one embodiment, the content-serving application may operate as an application where the user experience is similar to that of a radio. For example, each piece of content provided by the application may have its own "station" which can be accessed by the user to hear the content. As a non-limiting example, to add a "station," the user may go to a station manager that may provide available stations from the application. The station manager is like a library catalog of content available from the application. In some embodiments, the stations manager may be web-based. The station manager may be broken up into categories of content. As non-limiting examples, the categories may be music, news, social, sports, talk, and the like. Of course, the names and number of categories available may vary according to the specific implementation of the invention.

Selecting a particular category of content, the available stations may be displayed for the selected category. In some embodiments, when selecting a particular category, additional menus and sub-categories may be displayed. As a non-limiting example, audio books may be a sub-category within the category of "Talk." Upon selecting the audio books sub-category, a list of available audio books or "stations" may be displayed. Generally, the content provided by the application may be referred to as a "station." As a non-limiting example, NPR may be a station under the "news" category, ESPN may be a station under the "sports" category, and so on. There may also be a "social" category from which social networking sites may be individual stations. In this case, content from the social networking sites, such as status updates, may be heard using the content-serving application. Some stations may also be saved as a preset station.

When the audio book is added to the library of available content (e.g., it is added as a station), the user can play the audio book. If the user does not play the audio book (block 116), the book remains in the library as an available book (or "station") (block 118).

In the case of audio books, when the user is in the audio books category, the user may have the ability to, as examples and without limitation, browse for books by type, select books, view portions of the books (e.g., chapters or groups of chapters) available to the user at the current time, and/or resume listening to a book from the point where the listener last listened to the book. Further details of these functions will be described below.

When the audio book is played (block 116), the entire content of the book will not be transmitted at once. Rather, the content is transmitted in segments (e.g., divided by chapter and/or tracks) (block 120). The segments may be defined or predetermined for each book. In some cases, the books may be obtained from a third-party who segments the book. One such third-party is LIBRIVOX, a provider of free audio books in the public domain. The content-serving application provides the books to a user and determines when new content is provided. Further details will be provided below.

The audio book may be output based on the manner in which the book was segmented (block 122). As will be described below, new content may not be presented to the user until a threshold value of content is heard by the user in the presented segment.

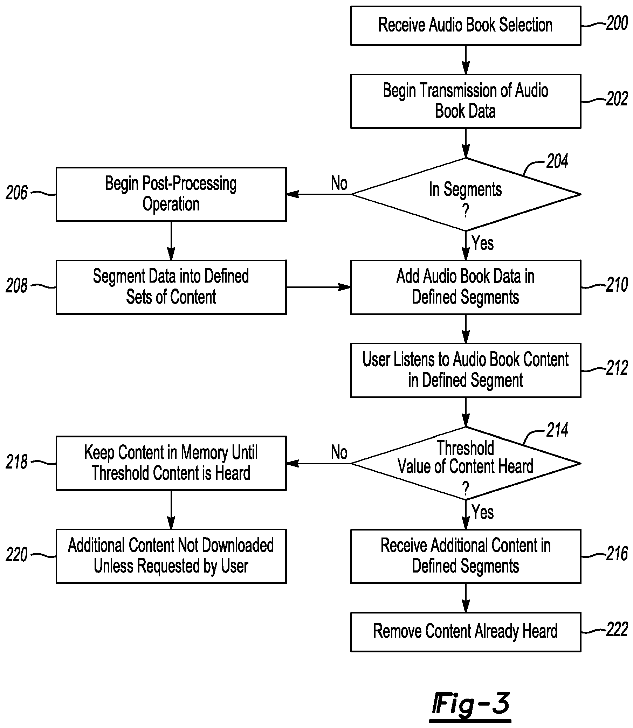

Figure 3 shows a process for downloading the audio books. The data sizes of books do not make caching an entire book an efficient use of the bandwidth. Thus, the audio books are treated differently in delivering content. A book may be sent in manageable pieces which may require pre-processing of the content to divide the book into pieces. In order to facilitate efficient handling of the data, the cache may be emptied at a point after the user has listened to a particular track of content. In this way the user is not storing large amounts of data on a mobile device, yet continues to have access to the content.

The divisions or segmenting may be accomplished according to chapters. In general, the segmenting is done so that breaks are natural and not stop in mid-sentence or mid-paragraph. The content may be delivered in segments that provide the user with enough content to listen for a suitable amount of time. As a non-limiting example, a track may be about 20 to 30 minutes. In some embodiments, the content may be delivered so that the user has access to some of the immediately previously heard sections and several of the immediately succeeding sections. Once a threshold of listening is achieved, the application may remove the oldest sections and add the newest tracks.

As a non-limiting example, if the application can hold 8 tracks of a book which has more than 8 tracks, the listener could have access to the previous 3 tracks (e.g., tracks 1-3), the 4 succeeding tracks (tracks 5-8), and the current track (track 4). Upon completing track 4, track 1 is removed and track 9 added. When the book plays for the first time, the first 4 tracks may be loaded. When the first track finishes playing, it would remain and track 5 would be added. The process would continue until a total of 8 tracks existed. When the last track of the book is delivered, the cache may show the last 8 tracks of the book. When the last track is played, the user may have the ability to remove the book from the content-serving application cue.

The audio book content may be segmented by the audio book provider (e.g., the publisher) or by the content-serving application provider. In the case that the content is segmented by the audio book provider, the provider may divide the audio book into tracks comprising one or more chapters of the book. In a case where the audio book is provided as a whole (e.g., not segmented), the content-serving application provider may perform post-processing on the audio book to segment the book in to tracks. In some embodiments, the content-serving application provider may segment the book regardless of whether or not the audio book provider has segmented the book.

Figure 3 shows a process for delivering a segmented audio book for to a nomadic device or to the VICS 12. The audio book may be downloaded and stored on the nomadic device 54 or the head unit 12. Additionally or alternatively, the audio book may be streamed from one or more server(s). An audio book may be selected by a user as described above (block 200). Transmission of the book data may begin once a book has been selected by the user (block 202).

A book provider may have already segmented the book into segments (e.g., into organized tracks). However, the book provider (also referred to as "content owner") may only provide the entire book without any segmentation of the book. The content owners may provide books in whole recording formats or in another way that is not intuitively segmented. If the book is not in segments (block 204), the data may be post-processed (block 206) and the book segmented into defined sets of content (block 208) such as, and without limitation, chapter groupings or tracks. In one embodiment, post-processing the data in order to segment the book into chapter groupings or tracks may allow for efficient transfer of data to the mobile client 54. The post-processing of the data can be accomplished whether the data is stored on the servers of the content-serving application provider or the content (e.g., audio book) provider.

In one embodiment, the content-serving application may provide verbal instructions about content loading or error messages. These will be played before or after tracks.

When the book has been segmented, the audio book data may be received at the nomadic device 54 or the VICS 12 according to the defined segments (block 210). As one non-limiting example, the data may be downloaded in chapter groupings. In another non-limiting example, the data may be further segmented into audio tracks. Each grouping or track may include one or more chapters of the book. In one non-limiting embodiment, each track is a chapter. Further, the tracks may include pagination. In one embodiment, pagination is used to ensure that correct ordering of the tracks is achieved. Once the tracks of the book, for example, have been established, the user may listen to the audio book as tracks from the nomadic device 54 or the VICS 12 (block 212).

In one embodiment, when the user is in the vehicle 10, the book data may be received at the nomadic device 54, but operated and output from the VICS. Using, for example, a BLUETOOTH connection and one or more BLUETOOTH profiles such as HFP, SPP and/or DUN, the audio book data may be transmitted to the processor 14 for output from speakers 42. The connection for a mobile device to the VICS 12 also may be achieved by a USB connection using a suitable accessory protocol. The user may use a number of soft keys and/or hard keys in the vehicle to operate the audio book. Non-limiting examples include buttons on the steering wheel, in the center stack, in the center console, and the like. Additionally or alternatively, the user may use voice commands to operate the audio book.

As the user listens to the audio book, a track may be removed from the listening queue after the user has listened to the track. However, once a track is removed from the station's playlist, the user can still retrieve a specific track if desired. In one embodiment, a list or group of selectable chapters may be presented to the user. For example, the chapters may be presented as a table of contents. If the user selects a chapter previous to the current chapter in the book, the selected chapter will appear at the top of the track list. If the user selects a chapter after the current selection, the selected chapter will appear as the last track in, or toward the end of, the content/track list.

In one embodiment, a function may be provided that allows a user to make a newly selected chapter the starting point for listening of the audio book. For example, the user may select a "start from here" input (e.g., a soft button, link, soft key mapped to a graphic or text on display 18, etc.). Upon selecting the input, a flag or other indicator (which may or may not be visible to the user) may be set which the application may use to identify where to start playing the audio book. Upon selecting this function, the station tracks may be re-ordered to reflect the change of the starting point.

Since a book is downloaded in the device cache for playback in segments (e.g., chapter groupings or tracks), a new track or tracks may not be added until the user has completed listening to the current set of tracks in the downloaded segment. However, the user may manually add additional tracks if desired. As illustrated in Figure 3, the application may monitor how much of the book has been played by the user (block 214). At a threshold value, a new segment or set of tracks, for example, may be downloaded to the client device (e.g., the VICS 12 or the nomadic device 54) (block 216). In one embodiment, the threshold value may be 20 minutes of the audio book played. In another embodiment, the threshold value may be 30 minutes of audio book played. In some embodiments, the threshold hold value may be based on a number of chapters played or a number of tracks. In additional or alternative embodiments, the threshold value may be based on size of the content. As a non-limiting example, the content may be received when a number of bytes (e.g., kilobytes or megabytes) have been played. Of course, other threshold values may be defined without departing from the scope of the various embodiments of the invention.

As a non-limiting example, the first eight tracks (which may be one or more chapters or parts of chapters) may be downloaded of the book and the user may start playing the first chapter. Additional tracks will be loaded once the user has listened to a threshold of the content already provided (e.g., a threshold value defined based on the first eight tracks). Additional tracks may not be cached other than the currently playing track(s).

If the threshold value has not yet been reached (block 214), the content in the current track(s) may remain in cache or memory (block 218). In one embodiment, the earliest content may remain in cache until the threshold value is reached. Additional content may not be downloaded to the client device (block 220) since the threshold value has not yet been reached. However, the user may request additional content (e.g., chapter or tracks). If the user request additional content, the data may be downloaded in segments or based on the request from the user. As a non-limiting example, the user may request that multiple segments or all of the book data (e.g., all of the content) be downloaded to the device.

If the threshold value has been reached and additional content is downloaded, the earliest content, or the content already heard, may be removed from the available tracks and not displayed (block 222). As a non-limiting example, newer chapters will not replace the first 3 tracks of an audio book until the third track has been played. When the third track completes playing (and the user has gone to track 4), the first track may be removed and replaced with a ninth track at the bottom of the content list. Viewing the track list, the currently playing track (in this example, track 4) would be shown toward the middle of the list, with 2 tracks ahead of it (e.g., tracks 2 and 3) available for listening and 5 tracks afterwards for future listening (e.g., tracks 5-9). This organization may accommodate the user's likely desire to listen to portions heard previously in order to regain the context and thread of the book's narrative. This distinguishes the listening of audio books from the type of listening during a podcast.

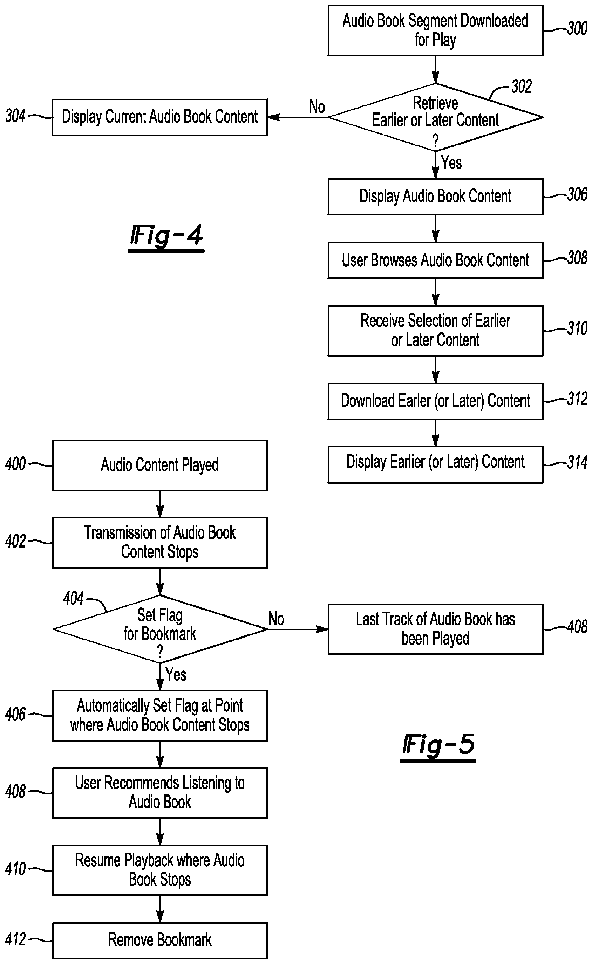

In some cases, the user may want to play earlier or later content of the book than the currently playing track. In some embodiments, the user may receive additional segments (e.g., chapter or tracks) of content for play adding to the segment(s) of content provided by the application. In additional or alternative embodiments, the audio book content may be transmitted with content that is earlier and later than the current segment of the audio book. Figure 4 illustrates a process for retrieving content that is earlier or later than the current segment available for playing from the client device (e.g., the VICS 12 or the nomadic device 54).

The audio book segment available for play may be received and displayed (block 300). The user may desire not to retrieve the earlier or later content (block 302). Accordingly, the current segment may be available for play from the device (block 304). In one embodiment, a user may scroll ahead or back in the currently playing track. The user may also go back or jump ahead within the current track. The amount that the user may move within a current track may be preconfigured. As a non-limiting example, the user may move a configurable number of seconds. As another non-limiting example, the user may move a configurable number of pages or paragraphs.

If previous or later content is retrieved (block 302) from the current segment, the user may select from a list of available chapter or tracks (e.g., from a table of contents) as described above. In another embodiment, the user may use input controls (e.g., graphical buttons on the display, soft keys in the vicinity of the driver or on the nomadic device 54, and the like) to display the earlier or later content to the client device (e.g., the VICS 12 or the nomadic device 54) (block 306). The user may browse the earlier or later content (block 308). As a non-limiting example, a user may scroll up, using the touchscreen display 18 or of the nomadic device 54 or one or more soft buttons/keys in the vicinity of the driver seat or on the nomadic device 54, may load a set of previous chapters or tracks (e.g., if a book has 24 tracks and the user is on track 9, one or more of the previous 8 tracks that may be available). Other gestures may include a swipe of the display 18 or of the nomadic device display. In one embodiment, by scrolling, swiping, or by using a [<<] button or [>>] button, for example, on the head unit of the VICS 12, the track data for all of the tracks (e.g., before and after the current track) may be downloaded.

As a non-limiting example of this process in practice, if the user is listening to track 16 (the screen may show tracks 14 through 22 and playing track 16) and decides to listen to something in chapter 4, the user may scroll up to chapter 14 in which case chapters 5 - 13 may appear. Scrolling again may show chapters 1 through 8 and the user may select chapter 4 and start listening to it. As another example, the user may scroll and only the individual chapters may be displayed. Of course, the process in this example is provided for illustration and, thus, is non-limiting. When the user completes chapter 4, or part of it, the user may go back to chapter 16 and resume listening where he left off. In this way, the user may download all the tracks of a book if desired.

Referring to block 310, a selection may be made of the earlier or later content (block 310). The data corresponding to the selected book content may be downloaded to the device (block 312). The data may be the selected content of the audio book.

In some embodiments, the data that may be downloaded to a client device may be metadata that is used by the application to retrieve book content. For example, the audio book may be an RSS feed. The metadata may be used to invoke a call to retrieve the RSS feed for a particular chapter or track.

When the content is downloaded, the earlier or later content may be displayed and available to the user for play (block 314). In some embodiments, when the play of the earlier or later track is completed, and the user returns to where the book was left off, the earlier or later content may again be removed from memory. Alternatively, the earlier or later content may remain in memory (e.g., temporary or permanent) such that the current track(s) and the earlier or later track(s) may be displayed to the user.

If the user stops listening to an audio book, e.g., by stopping or pausing playback, exiting the audio book station, or exiting the software application), a "bookmark" may be placed at the point in the book where the user left. The user may resume listening when the user re-starts play of the audio book. The bookmark may be a flag or other identifier (which may or may not be visible to the user) identified by the application as the point where the user stopped listening to the audio book. The point may be identified by the content URL and a time off-set function. Figure 5 illustrates the process for bookmarking an audio book.

The audio book content may be played from the client device such as the VICS 12 or the nomadic device 54 (block 400). The audio book may stop playing (block 402) because, for example (and without limitation), the user has paused playback, stopped playback, exited the audio book station or application with the content-serving application, or exited the content-serving application. Additionally, the bookmark may be set if a network connection is lost. If playback of the entire audio book has not finished, a flag or other identifier may be set (block 404) for placing a bookmark at the point where playback stopped (block 406). The application may remember where the user stopped the audio book in the course of playing the audio book. When the user returns to the audio book, the playback may resume at the point where the track was "bookmarked."

In some embodiments, the user may additionally or alternatively manually bookmark a track. For example, the user may submit an instruction (e.g., via voice command, button press, or the like) to bookmark a point in a playing track.

In certain instances, such as when the audio book has been played in its entirety (e.g., the end of the audio book has been reached), a bookmark may not be set (block 408). The audio book may be exited or the application exited. Alternatively, the user may go back to portions of the audio book for playback of content from the audio book. In this latter case, a bookmark may be set if playback of the audio book is stopped.

In some embodiments, when network connectivity is lost during playback of an audio book track (which is cached), the application can determine whether the track played before the connectivity loss has finished (e.g., the end of the track has been reached) and, if so, to move to the next track when connectivity is restored. Thus, once connectivity is restored, the next track can be played if the user remains in the station or in the audio books application. The next track may automatically play when connectivity is restored or the use may manually select "play" to resume playing. If the user has left the station or the application and returns to the audio books once network connectivity is restored, playback of the audio book may resume with the next track. In some embodiments, to enable this function, the application may be programmed with an instruction that "resume=true."

When the user recommences playback of the audio book (block 408), playback of the audio book may resume where the playback had stopped (block 410). In some embodiments, the point where playback will resume may be displayed. In the case where the user may manually set a bookmark and resume playback, the user may select the displayed bookmark point and resume play. Otherwise, playback may resume automatically at the displayed bookmarked point. When playback of the audio book resumes, the bookmark may be deleted (block 412).

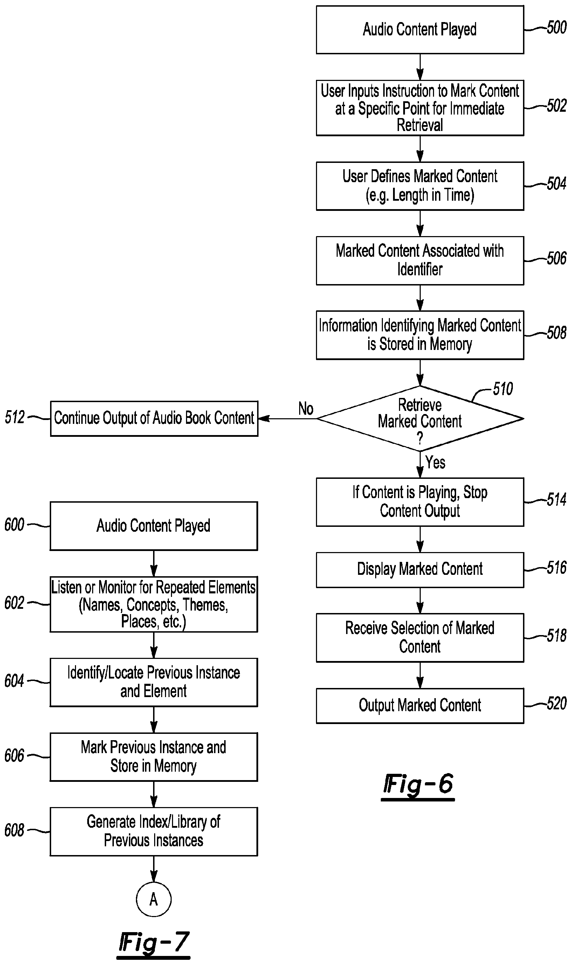

A user may desire to mark portions of the audio book during playback for future reference or playback. One or more inputs (e.g., and without limitation, buttons or voice commands) through the VICS 12 or the nomadic device 54 may be available to the user to mark such portions of the audio book. These points in an audio book may be identified by identifiers used by the application to identify such points. In additional or alternative embodiments, a "scrubber" bar or slider bar may be used from the interface of the head unit 12 or the nomadic device 54 to place markers. These points or markers are sometimes referred to herein as "dog ears." Figure 6 and 7 show two embodiments of using dog ears with the audio books.

In some embodiments, a dynamic mapping may occur between the markers and the position in the audio book. The mapping may be stored on the nomadic device 54 or on the head unit 12. Based on the mapping, the "dog ears" may be displayed and available to the user.

Referring first to Figure 6, the audio book content may be played from the device such as the VICS 12 or the nomadic device 54 (block 500). During playback, the user may input instructions, for example, through voice commands or button presses (capacitive, graphical, soft keys, hard keys, and the like) to set a flag or other identifier at one or more portions of the audio book for future retrieval and reference (block 502). By marking or flagging (i.e., "dog ear") these points, the user may retrieve the flagged portion of the audio book immediately (e.g., without browsing through a number of chapters). The user may also input instructions (e.g., through voice commands and/or button presses) to remove the one or more "dog ear" points.

In some embodiments, as shown in block 504 of Figure 5, the user may exactly define the flagged point. For example, the user may define the length (e.g., in time, such as seconds or minutes) of the point in the audio book where the user desires to place the "dog ear." The user may also define the flagged point in terms of paragraphs and/or pages. As a non-limiting example, the user may define the point as "page 45, paragraph 3 to page 46 paragraph 1." Another example of a defined "dog ear" point may be "page 50, paragraphs 20 - 25." Of course, other variations may be possible without departing from the scope of the various embodiments of the invention.

Setting the marking identifier with the content (block 506), the "dog ear" (including the information identify at which point the "dog ear" is placed) may be saved in memory (block 508). The information may be used when the flagged points are requested by the user.

The user may retrieve the flagged content at any time. If the user does not retrieve it (block 510), the user may continue playback of the audio book (block 512). Otherwise, when the user requests to retrieve the flagged content, if the audio book is playing, playback may be stopped (block 514). The user may browse the flagged content which may be displayed to the user (block 516). The user may select any one for playback (block 518). The select content may be output from the device (e.g., the VICS 12 or the nomadic device 54) (block 520).

In one embodiment, the user may use one more function buttons to retrieve the content. For example, a function button may be placed near a "previous track" button (or the like) which may permit the user to retrieve previous flagged content. With each press, each preceding flagged point can be retrieved until the first "dog ear" is retrieved. The retrieval function for previous flagged content may then be unavailable. For content that is further ahead of the current point in the audio book, a function button placed near a "next track" button may enable the user to browse through the flagged content ahead of the current point in the audio book. The retrieval function would be made unavailable upon listening to the last piece of flagged content. In other embodiments, the user may use voice commands or other buttons that are in the vicinity of the driver seat and mapped to allow control and operation of the audio book service.

In some embodiments, the "dog ear" content may be saved permanently. Thus, the user's "dog ears" may continue to be available even if the track is not within the current track list of the station or if the user exits the application and resumes play at a later time.

Referring now to Figure 7, another embodiment of the process for flagging content for later retrieval and reference is shown (also referred to as a "dog ear"). In some cases, content may be automatically flagged. As a non-limiting example, characters names, places, themes, concepts, and the like (referred to herein as "elements" of the audio book) may be identified and the application may search for previous or future references of the elements. The elements may be stored in memory. In one embodiment, an index may be created which may be used by the user for retrieving the corresponding content. The index may include a link or other input directly leading to the flagged content. Additionally or alternatively, the index may be listed based on the chapter or track and the page number or the instance of time (e.g., track 2 at 2:30).

In some embodiments, the user's behavior may be monitored and the elements searched and stored based on the user's behavior. As a non-limiting example, if the user has flagged content in the audio book which has been referenced a threshold number of times, the elements found in the referenced content may be searched and stored. Further, if the referenced content includes character's names or places, for example, the instances where the names and/or places are mentioned will be searched and stored in an index, for example. The user may then select a referenced portion in the index to retrieve the content.

In some embodiments, an index may be created based on crowdsourcing information. For example, if, based on the behavior of all readers of the audio book shows that particular content is being flagged, an index may be automatically created with the flagged content. If available, the index may be downloaded when the user firsts downloads the audio book. Alternatively or additionally, the user may manually download the index.

Referring to block 600, the audio book content may be played from the user device. Instances of repeated elements or repeated references to flagged content may be monitored or listened for by the application (block 602). The elements may be search for through the audio book to retrieve previous and future instances of the elements (block 604). The instances may be flagged (block 606) and an index of the flagged content generated (block 608). The index may be downloaded to the device (e.g., the VICS 12 or the nomadic device 54). In some embodiments, a request may be sent to the user as to whether they would like to download the index. As represented by circle block A, the process may continue as shown in Figure 5.

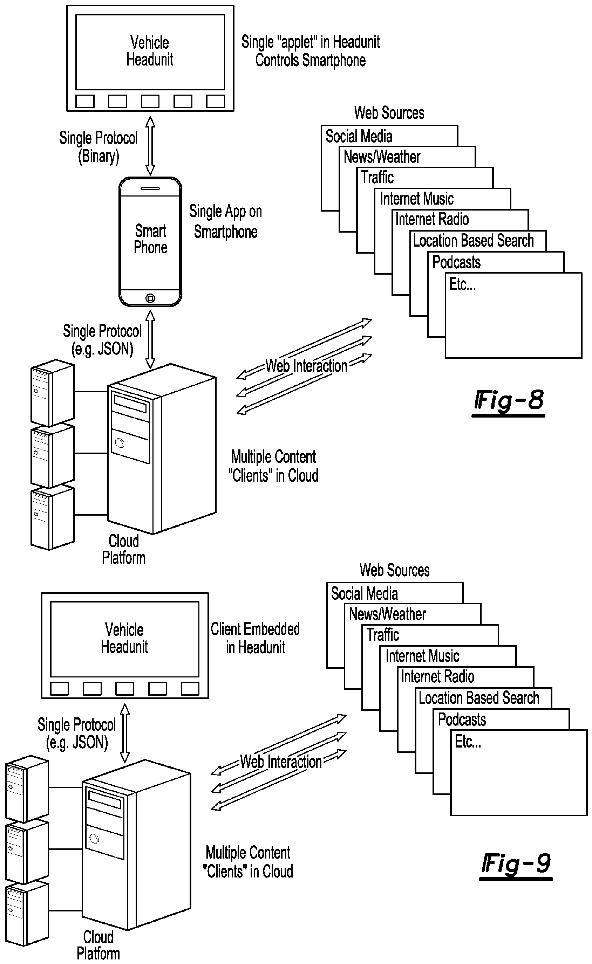

Figure 8 illustrates the system architecture for operating one or more services via the content-serving application running on the nomadic device 54, such as a mobile phone. The vehicle head unit 12 is described in detail above with respect to Figure 1. One or more applets (or APIs) may be stored and executing on the head unit 12 which provides instructions to and controls the application on the nomadic device 54. The nomadic device 54 may include one or more content-serving applications communicating with the applets on the head unit 12 to serve content from the Internet on to the head unit. The content-serving application(s) may exchange data and commands from the Internet-based services to the head unit, and vice-versa, using a single protocol. In one embodiment, the protocol may be a binary protocol.

The nomadic device 54 additionally may communicate with one or more servers located remotely from the vehicle 10 or the nomadic device 54 using a network connection such as a cellular or other wireless connection. In some embodiments, the communication may be an Internet communication. The servers may be said to be operating in "the cloud." Data may be exchanged between the nomadic device 54 and the server(s) using a single protocol. Non-limiting examples include JSON, XML, or SOAP.

One or more clients for the Internet-based content may be stored and executing on the server(s). The content-serving application may interact with the Internet-based content via messages passing through server(s) over the Internet 46. In one embodiment, the interaction may be through the World Wide Web (WWW). Non-limiting examples of the Internet-based content may include social media, news, weather, traffic, Internet music, Internet radio, audio book services, podcasts, and the like. Although not limiting, the various embodiments of the invention are described with respect to the use of audio books.

Figure 9 illustrates the system architecture for operating one or more services via the content-serving application running on the head unit 12. In this embodiment, a direct communication between the head unit 12 and the server(s) may exist. The communication may be a wireless communication, and in some embodiment, a wireless communication over the Internet. Message may be exchanged between the head unit 12 and the server(s) using a single protocol. As non-limiting examples, the protocol may be JSON, XML, or SOAP. In some embodiments, an SDK may be used to develop and enable the connection capabilities between an embedded communication module in the vehicle and the Internet.

One or more clients for the Internet-based content may be stored and executing on the server(s). The content-serving application may interact with the Internet-based content via messages passing through server(s) over the Internet 46. In one embodiment, the interaction may be through the World Wide Web (WWW). Non-limiting examples of the Internet-based content may include social media, news, weather, traffic, Internet music, Internet radio, audio book services, podcasts, and the like. Although not limiting, the various embodiments of the invention are described with respect to the use of audio books.

In some embodiments, in accordance with operating the content aggregating application as a radio, the user may be offered a playlist browsing function on the application. Audio books may be provided by several, different providers. Accordingly, there may be one station, site, or sub-application within the application associated with each audio book provider. In each station, a user may browse for books within the station that are available to the user (e.g., either free books, a play list based on account permissions, or both). Thus, the user may browse the books available for download for each audio book provider. Additionally, the user can browse within a book using the table of contents for a book.

The ability to choose books may be based on the user's account type and the types of books available by the audio book provider:

Account type 1 (e.g., free books): A content provider may have free books available for listening. These books may be available either as part of a subscription with the content-serving application provider or the content (audio book) provider may require the user to have an account to allow access to the content. In these cases, the content-serving application may allow for an account sign on using the user's account with the audio book provider.

Account type 2 (e.g., premium content/pay per book): The user may have an account with the content owner that, when logged in, may allow the user the ability to browse and select the books available for listening, based upon the user's account. The content owner (audio book provider) may make the purchases available upon sign in or may require the user to perform some configuration at the content owner's web site to provide the content. The content-serving application will play the data as it is provided by the content owner.

Account type 3 (e.g., premium content/pay by subscription): The user may have established a subscription with the content owner that provides access to audio book titles that the user has selected for her/his account. When the user logs into the station for the content owner, the subscribed to audio titles may be shown as available. Upon selecting an audio book, the content will play.

In some embodiments, a system for downloading audio books in a vehicle comprises at least one vehicle computer. The vehicle computer may execute a content-serving software application stored in memory of the vehicle computer or a nomadic device, such as a mobile phone. The program has instructions for receiving one or more audio books as at least one type of content for use through the content-serving software application. The audio books may be received through a download from the Internet. The one or more audio books may be received, via the content-serving application, in multiple segments. Each segment may have one or more chapters of the audio book. A threshold value may define the amount of content played in the downloaded segment. Additional content is downloaded to the vehicle computer or nomadic device when the threshold value has been exceeded.

In some embodiments, a system for downloading audio books may include a user device which displays a selection of one or more audio books for download to the user device. A selection of an audio book may be received for download to the user device. A set of first tracks of the audio book may be stored on the user device. The content of the set of first tracks may be played back. If a threshold value of content has been played back, a set of second tracks of the audio book may be received and stored on the user device. Additionally, at least one track may be removed from the set of first tracks. A current track of the set of second tracks may be played back. The remaining tracks of the set of first tracks and the tracks of set of second tracks may be played back from the user device.

While exemplary embodiments are described above, it is not intended that these embodiments describe all possible forms of the invention. The scope of the invention is limited by the appended claims.

## Claims

1. A computer system for outputting literary content on a user device, the computer system comprising:
at least one user device configured to:
receive input from a user to download on the user device literary content data stored on a remote computer system, the literary content data being segmented into multiple segments for download to the user device;
receive a portion of the multiple segments of the literary content data in response to the input;
store the portion of the multiple segments in memory of the user device;
upon occurrence of an event,
download at least a portion of remaining segments; remove selected segments of the stored segments from memory; and
output a segment from the user device in response to a user selecting the segment for output,
wherein the event is a threshold amount of content that has been played on the user device; and
wherein, once the threshold amount of content has been played on the user device, a first number of segments is available on the user device, the first number of segments being less than the total number of segments on the remote computer system and comprising a currently playing segment, a second number of segments immediately succeeding the currently playing segment and a third number of segments immediately preceding the currently playing segment.

2. The computer system of claim 1 wherein the segments removed from memory are temporarily removed and retrievable upon user request.

3. The computer system of any of claims 1-2 wherein the threshold amount is based on
at least one of a threshold number of chapters or a threshold number of pages;
at least one of on a threshold time of playback.

4. The computer system of any of claims 1-3 wherein the additional segments are downloaded upon user request.

5. The computer system of any of claims 1-4 wherein the user device is at least one of a vehicle head unit;
a portable device;
a first user device and is further configured to establish a connection with a second user device from which user commands are input and the segments are output for playback.

6. The computer system of claim 5 wherein the connection is a Bluetooth connection or a USB connection.

7. The computer system of any of claims 1 - 6, wherein the user device is further configured to receive instructions to set a flag at one or more segments of the literary content data.

8. The computer system of claim 7, wherein the user device is further configured to create an index of flagged segments.

9. The computer system of any of claims 1 - 8, wherein the literary content is segmented for download based on a bandwidth limitation.

10. The computer system of claim 9 wherein the segmenting includes:
identifying natural stops of the audio book; and
segmenting according to the natural stops.

11. A method of outputting literary content on a user device, the method comprising:
executing a content-serving application on a user device, the content-serving application providing content from multiple sources of Internet based services and information;
receiving a selection of an audio book service via the content-serving application on the user device;
establishing a connection to the audio book service via the user device;
downloading defined segments of the audio book, in response to said selection, wherein additional segments are downloaded upon occurrence of an event;
upon download of the audio book, associating the audio book to one or more input functions of the content-serving application, wherein selection of the one or more input functions executes the selected audio book and one or more functions of the audio book;
removing selected segments of the downloaded segments upon occurrence of the event, wherein the event is a threshold amount of the audio book that has been executed on the user device; and
wherein, once the threshold amount of the audio book has been executed on the user device, a first number of segments is available on the user device, the first number of segments being less than the total number of segments and comprising a currently executed segment, a second number of segments immediately succeeding the currently executed segment and a third number of segments immediately preceding the currently executed segment.

12. The method of claim 11 further comprising outputting a segment from the user device in response to a user selecting the segment for output.

13. The method of claim 11 or 12 wherein the functions of the audio book operated via the content-serving application emulate functions on a radio.

14. The method of any of claims 11-13 wherein the content-serving application aggregates the content from the multiple sources in a single interface.

## Patentansprüche

1. Computersystem zum Ausgeben literarischer Inhalte auf einer Benutzervorrichtung, wobei das Computersystem Folgendes umfasst:
mindestens eine Benutzervorrichtung, die zu Folgendem konfiguriert ist:
Empfangen einer Eingabe von einem Benutzer zum Herunterladen in einem entfernten Computersystem gespeicherter literarischer Inhaltsdaten auf der Benutzervorrichtung, wobei die literarischen Inhaltsdaten zum Herunterladen auf die Benutzervorrichtung in mehrere Segmente unterteilt werden;
Empfangen eines Teils der mehreren Segmente der literarischen Inhaltsdaten als Reaktion auf die Eingabe;
Speichern des Teils der mehreren Segmente in einem Speicher der Benutzervorrichtung;
bei Auftreten eines Ereignisses,
Herunterladen zumindest eines Teils der verbleibenden Segmente;
Entfernen ausgewählter Segmente der gespeicherten Segmente aus dem Speicher; und
Ausgeben eines Segments von der Benutzervorrichtung als Reaktion darauf, dass ein Benutzer das Segment zur Ausgabe auswählt,
wobei das Ereignis darin besteht, dass eine Schwellenwertmenge an Inhalten auf der Benutzervorrichtung abgespielt wurde; und
wobei, sobald die Schwellenwertmenge an Inhalten auf der Benutzervorrichtung abgespielt wurde, eine erste Anzahl an Segmenten auf der Benutzervorrichtung verfügbar ist, wobei die erste Anzahl an Segmenten kleiner ist als die Gesamtanzahl an Segmenten in dem entfernten Computersystem und ein aktuell abgespieltes Segment, eine zweite Anzahl an Segmenten, die direkt auf das aktuell abgespielte Segment folgen, und eine dritte Anzahl an Segmenten, die dem aktuell abgespielten Segment direkt vorausgehen, umfasst.

2. Computersystem nach Anspruch 1, wobei die aus dem Speicher entfernten Segmente vorübergehend entfernt sind und auf Benutzeranfrage zurückgeholt werden können.

3. Computersystem nach einem der Ansprüche 1-2, wobei die Schwellenwertmenge auf Folgendem beruht:
mindestens einem von einer Schwellenwertanzahl an Kapiteln oder einer Schwellenwertanzahl an Seiten;
zumindest einer Schwellenwert-Abspielzeit.

4. Computersystem nach einem der Ansprüche 1-3, wobei die zusätzlichen Segmente auf Benutzeranfrage heruntergeladen werden.

5. Computersystem nach einem der Ansprüche 1-4, wobei die Benutzervorrichtung mindestens eines ist von einer Fahrzeug-Haupteinheit;
einer tragbaren Vorrichtung;
einer ersten Benutzervorrichtung, die außerdem dazu konfiguriert ist, eine Verbindung mit einer zweiten Benutzervorrichtung herzustellen, von der Befehle eingegeben werden und die Segmente zum Abspielen ausgegeben werden.

6. Computersystem nach Anspruch 5, wobei es sich bei der Verbindung um eine Bluetooth-Verbindung oder eine USB-Verbindung handelt.

7. Computersystem nach einem der Ansprüche 1-6, wobei die Benutzervorrichtung außerdem dazu konfiguriert ist, Anweisungen zum Setzen einer Markierung an einem oder mehreren Segmenten der literarischen Inhaltsdaten zu empfangen.

8. Computersystem nach Anspruch 7, wobei die Benutzervorrichtung außerdem dazu konfiguriert ist, ein Verzeichnis markierter Segmente zu erstellen.

9. Computersystem nach einem der Ansprüche 1-8, wobei die literarischen Inhalte auf Grundlage einer Bandbreitenbeschränkung zum Herunterladen in Segmente unterteilt werden.

10. Computersystem nach Anspruch 9, wobei das Unterteilen in Segmente Folgendes beinhaltet:
Identifizieren natürlicher Pausen des Hörbuchs; und
Unterteilen in Segmente gemäß den natürlichen Pausen.

11. Verfahren zum Ausgeben literarischer Inhalte auf einer Benutzervorrichtung, wobei das Verfahren Folgendes umfasst:
Ausführen einer Inhaltsbereitstellungs-Anwendung auf einer Benutzervorrichtung, wobei die Inhaltsbereitstellungs-Anwendung Inhalte aus mehreren Quellen internetbasierter Dienste und Informationen bereitstellt;
Empfangen einer Auswahl eines Hörbuchdienstes über die Inhaltsbereitstellungs-Anwendung auf der Benutzervorrichtung;
Herstellen einer Verbindung mit dem Hörbuchdienst über die Benutzervorrichtung;
Herunterladen definierter Segmente des Hörbuchs als Reaktion auf die Auswahl, wobei bei Auftreten eines Ereignisses zusätzliche Segmente heruntergeladen werden;
bei Herunterladen des Hörbuchs, Zuordnen des Hörbuchs zu einer oder mehreren Eingabefunktionen der Inhaltsbereitstellungs-Anwendung, wobei ein Auswählen der einen oder der mehreren Eingabefunktionen das ausgewählte Hörbuch und eine oder mehrere Funktionen des Hörbuchs ausführt;
Entfernen ausgewählter Segmente der heruntergeladenen Segmente bei Auftreten des Ereignisses, wobei das Ereignis darin besteht, dass eine Schwellenwertmenge des Hörbuchs auf der Benutzervorrichtung ausgeführt wurde; und
wobei, sobald die Schwellenwertmenge des Hörbuchs auf der Benutzervorrichtung ausgeführt wurde, eine erste Anzahl an Segmenten auf der Benutzervorrichtung verfügbar ist, wobei die erste Anzahl an Segmenten kleiner ist als die Gesamtanzahl an Segmenten und ein aktuell ausgeführtes Segment, eine zweite Anzahl an Segmenten, die direkt auf das aktuell ausgeführte Segment folgen, und eine dritte Anzahl an Segmenten, die dem aktuell ausgeführten Segment direkt vorausgehen, umfasst.

12. Verfahren nach Anspruch 11, ferner umfassend ein Ausgeben eines Segments von der Benutzervorrichtung als Reaktion darauf, dass ein Benutzer das Segment zur Ausgabe auswählt.

13. Verfahren nach Anspruch 11 oder 12, wobei die über die Inhaltsbereitstellungs-Anwendung betriebenen Funktionen des Hörbuchs die Funktionen eines Radios emulieren.

14. Verfahren nach einem der Ansprüche 11-13, wobei die Inhaltsbereitstellungs-Anwendung die Inhalte aus den mehreren Quellen in einer einzelnen Schnittstelle zusammenfasst.

## Revendications

1. Système informatique pour délivrer un contenu littéraire sur un dispositif d'utilisateur, le système informatique comprenant :
au moins un dispositif d'utilisateur configuré pour :
recevoir une entrée d'un utilisateur pour télécharger sur le dispositif d'utilisateur des données de contenu littéraire stockées sur un système informatique à distance, les données de contenu littéraire étant segmentées en plusieurs segments à télécharger vers le dispositif d'utilisateur ;
recevoir une partie des multiples segments des données de contenu littéraire en réponse à l'entrée ;
stocker la partie des multiples segments dans une mémoire du dispositif d'utilisateur ;
à la survenue d'un événement,
télécharger au moins une partie des segments restants ;
supprimer de la mémoire les segments sélectionnés des segments stockés ; et
sortir un segment du dispositif d'utilisateur en réponse à un utilisateur sélectionnant le segment pour une sortie,
dans lequel l'événement est une quantité seuil de contenu qui a été lue sur le dispositif d'utilisateur ; et
dans lequel, une fois que la quantité seuil de contenu a été lue sur le dispositif d'utilisateur, un premier nombre de segments est disponible sur le dispositif d'utilisateur, le premier nombre de segments étant inférieur au nombre total de segments sur le système informatique à distance et comprenant un segment en cours de lecture, un deuxième nombre de segments succédant immédiatement au segment en cours de lecture et un troisième nombre de segments précédant immédiatement le segment en cours de lecture.

2. Système informatique selon la revendication 1 dans lequel les segments supprimés de la mémoire sont provisoirement supprimés et récupérables à la demande d'un utilisateur.

3. Système informatique selon l'une quelconque des revendications 1 à 2 dans lequel la quantité seuil est basée sur
au moins un nombre parmi un nombre seuil de chapitres ou un nombre seuil de pages ;
au moins une durée de lecture seuil.

4. Système informatique selon l'une quelconque des revendications 1 à 3 dans lequel les segments supplémentaire sont téléchargés à la demande d'un utilisateur.

5. Système informatique selon l'une quelconque des revendications 1 à 4 dans lequel le dispositif d'utilisateur est l'un au moins parmi une unité de tête de véhicule ;
un appareil portatif ;
un premier dispositif d'utilisateur et est en outre configuré pour établir une connexion avec un second dispositif d'utilisateur à partir duquel des commandes utilisateur sont entrées et les segments sont produits pour la lecture.

6. Système informatique selon la revendication 5 dans lequel la connexion est une connexion Bluetooth ou une connexion USB.

7. Système informatique selon l'une quelconque des revendications 1 à 6, dans lequel le dispositif d'utilisateur est en outre configuré pour recevoir des instructions afin de positionner un marquage sur au moins un segment des données de contenu littéraire.

8. Système informatique selon la revendication 7, dans lequel le dispositif d'utilisateur et en outre configuré pour créer un index de segments marqués.

9. Système informatique selon l'une quelconque des revendications 1 à 8, dans lequel le contenu littéraire est segmenté pour un téléchargement sur la base d'une limitation de bande passante.

10. Système informatique selon la revendication 9 dans lequel la segmentation comprend :
l'identification des arrêts naturels du livre audio ; et
la segmentation en fonction des arrêts naturels.

11. Procédé de production de contenu littéraire sur un dispositif d'utilisateur, le procédé comprenant :
l'exécution d'une application de service de contenu sur un dispositif d'utilisateur, l'application de service de contenu fournissant un contenu à partir de multiples sources de services et d'informations basés sur Internet ;
la réception d'une sélection d'un service de livre audio via l'application de service de contenu sur le dispositif d'utilisateur ;
l'établissement d'une connexion au service de livre audio via le dispositif d'utilisateur ;
le téléchargement des segments définis du livre audio, en réponse à ladite sélection, dans laquelle des segments supplémentaires ont été téléchargés à la survenue d'un événement ;
lors du téléchargement du livre audio, l'association du livre audio à une ou plusieurs fonctions d'entrée de l'application de service de contenu, la sélection des unes ou plusieurs fonction d'entrée exécutant le livre audio sélectionné et une ou plusieurs fonctions du livre audio ;
la suppression des segments sélectionnés des segments téléchargés lors de la survenue de l'événement, dans lequel l'événement est une quantité seuil du livre audio qui a été exécuté sur le dispositif d'utilisateur ; et
dans lequel, une fois que la quantité seuil du livre audio a été exécutée sur le dispositif d'utilisateur, un premier nombre de segments est disponible sur le dispositif d'utilisateur, le premier nombre de segments étant inférieur au nombre total de segments et comprenant un segment en cours de lecture, un deuxième nombre de segments succédant immédiatement au segment en cours de lecture et un troisième nombre de segments précédant immédiatement le segment en cours de lecture.

12. Procédé selon la revendication 11 comprenant en outre la production d'un segment à partir du dispositif d'utilisateur en réponse à un utilisateur sélectionnant le segment pour une production.

13. Procédé selon la revendication 11 ou 12 dans lequel les fonctions du livre audio fonctionnant via l'application de service de contenu égalent les fonctions sur une radio.

14. Procédé selon l'une quelconque des revendications 11 à 13 dans lequel l'application de service de contenu agrège le contenu provenant de sources multiples dans une seule interface.
